# EUROPEAN PATENT APPLICATION

(11) **EP 1 026 191 A1**
(43) Date of publication of application: **09.08.2000**
(21) Application number: 00300779.6
(22) Date of filing: 01.02.2000
(51) Int. Cl.: C08G 79/04, C08L 85/02, C08K 5/523, C09K 21/12, C08G 64/08

(54) **Flame retardant compounds, process for their production and flame-retarded organic polymer materials**

(30) Priority: 02.02.1999 JP 2506799
(71) Applicant: Johoku Chemical Co. Ltd., Chuo-ku, Tokyo 103-0025 (JP)
(72) Inventor: Yamauchi, Toshiyuki, Tokyo (JP); Omichi, Masuo, Okegawa-shi, Saitama (JP)
(74) Representative: Hale, Stephen Geoffrey

(57) **Abstract**

Flame retardant compounds obtained by reacting bisphenol A, diphenyl carbonate and a phosphoric acid ester represented by the following general formula (1): 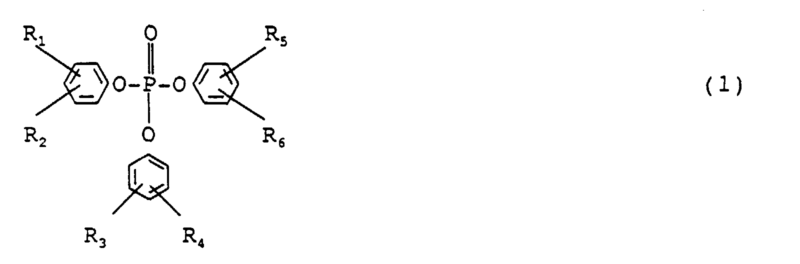 where R₁-R₆ may be the same or different and each independently represents hydrogen or methyl, a process for their production, and flame-retarded organic polymer materials containing them are provided.

## Description

### BACKGROUND OF THE INVENTION

### 1. Field of the Invention

The present invention relates to flame retardant compounds, a process for their production and flame-retarded organic polymer materials. The invention particularly relates to flame retardant polymer compounds containing no halogens, to a process for their production, and to organic polymer materials that have been rendered flame retardant thereby.

### 2. Description of the Related Art

Organic polymer materials, and especially synthetic resins, are widely used in a variety of fields that take advantage of their diverse properties, and such products require flame retardance as a measure for protection against fire. Known methods used to render organic polymer materials flame retardant include addition of flame retardants comprising halogen-based, phosphorus-based and inorganic compounds.

However, inorganic compounds are inadequate in terms of their flame-retarding effect, and although halogen-based compounds exhibit an excellent flame-retarding effect it is desirable to minimize their use for safety considerations, while the use of polycarbonate resins and the like has become restricted due to increasing concerns about environmental problems. On the other hand, phosphoric acid esters are the main phosphorus-based compounds used, but they have a problem of volatility due to their low molecular weight.

### BRIEF SUMMARY OF THE INVENTION

It is therefore an object of the present invention to provide novel flame retardant compounds that exhibit an excellent flame-retarding effect for organic polymer materials while having relatively few environmental pollution problems, as well as a process for their production, and organic polymer materials rendered flame retardant thereby.

In order to solve the aforementioned problems, the present invention provides a process for production of flame retardant compounds that comprises reacting bisphenol A, diphenyl carbonate and a phosphoric acid ester represented by the following general formula (1): 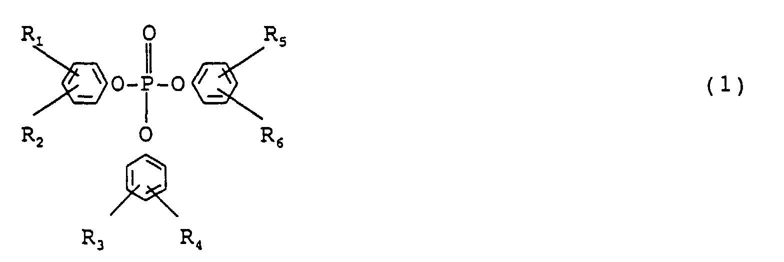 where R₁-R₆ may be the same or different and each independently represents hydrogen or methyl, and flame retardant compounds obtained thereby.

The invention further provides flame-retarded organic polymer materials containing these flame retardant compounds.

### DETAILED DESCRIPTION OF THE INVENTION

It is well known that reacting bisphenol A with diphenyl carbonate yields a polycarbonate by an ester exchange reaction, but the present inventors have found that reacting bisphenol A, diphenyl carbonate and a phosphoric acid ester represented by general formula (1) above yields novel compounds having phosphoric acid groups in a portion of the polycarbonate structure, and that these compounds exhibit an excellent flame-retarding effect on organic polymer compounds; the present invention has been completed on the basis of this finding.

The reaction of these three different compounds is promoted by mixing the three starting compounds, heating and stirring them in the presence of a common ester exchange reaction catalyst, such as any of various basic compounds, ammonium salts, phosphonium salts and the like, and then distilling out of the system the phenol or methyl-substituted phenol by-products. Here, the charging ratios of the three starting compounds can be varied to obtain polymer compounds with different molecular compositions, according to the following reaction formula. 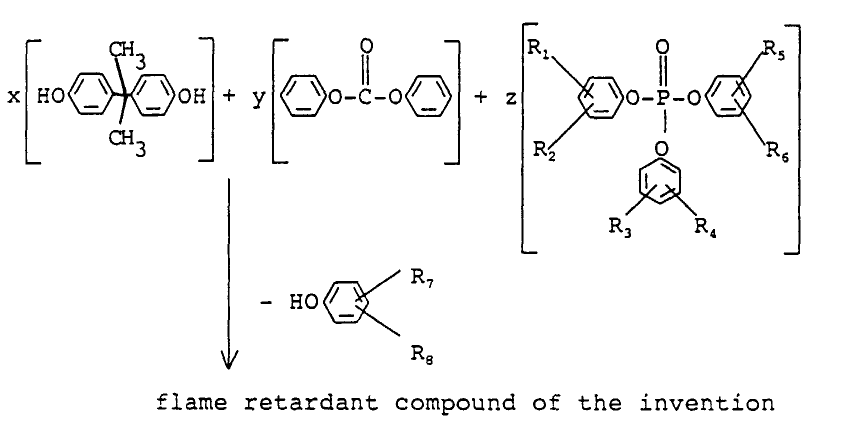 (where x, y and z are any desired positive integers, and R₁-R₈ may be the same or different and each independently represents hydrogen or methyl).

The flame retardant compounds of the invention obtained in this manner are believed to have a molecular structure comprising a structural unit represented by the following formula (A) which is a polycarbonate structural unit, and a structural unit represented by the following formula (B) which is a structural unit having a phosphoric acid group introduced into the structure. 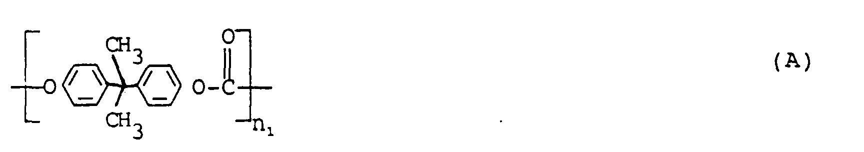 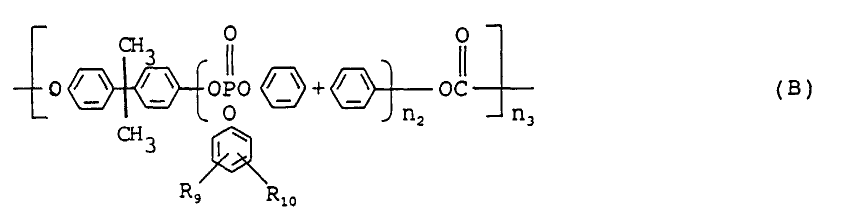 where R₉ and R₁₀ may be the same or different and each independently represents hydrogen or methyl, n₁ is 0 or a positive integer, and n₂ and n₃ each represent positive integers. The arrangement of the structural units of general formula (A) and the structural units of general formula (B) need not be regular.

In the flame retardant compounds of the invention, the phenoxy group 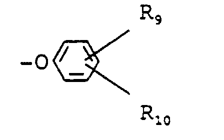 present in the structural unit of general formula (B) can further undergo ester exchange reaction, so that a portion thereof can have a three-dimensional crosslinked structure.

A flame retardant compound according to the invention preferably has a weight average molecular weight of 2000-30,000.

The flame retardant compounds of the invention are themselves flame-resistant polymer compounds, but they are also useful as flame retardants to be added to various organic polymer materials as polycarbonates, polyolefins, polyesters, styrene-based polymers, acrylic polymers and the like, and they produce virtually no environmental pollution or volatile products.

The present invention will now be explained more fully by way of examples.

### Example 1

A branched distillation tube comprising a thermometer, a stirrer, a condenser and a receptacle was mounted on a 200-ml 4-necked flask, and then 45.6 g (0.2 mole) of bisphenol A and 0.1 g (3.3 x 10⁻⁴ mole) of a tetrabutylammonium acetate catalyst were charged therein, and heated. Upon dissolution at 160°C, the mixture was stirred while charging 32.6 g (0.1 mole) of triphenyl phosphate, and the phenol was distilled off under reduced pressure. The reaction was suspended when phenol efflux ceased at an internal temperature of 190°C and reduced pressure of 5 mmHg, and the mixture was then cooled to 150°C. After next adding 23.5 g (0.11 mole) of diphenyl carbonate and again heating to dissolution, the phenol was distilled off under reduced pressure in the same manner as above. The reaction was completed when phenol efflux ceased at an internal temperature of 190°C and reduced pressure of 5 mmHg. A yield of 64 g was obtained.

Based on HPLC (GPC) analysis, the reaction rate for bisphenol A was 99.3%, the reaction rate for triphenyl phosphate was 94.6%, and the weight average molecular weight of the product was 8600. The phosphorus content of the product was 4.7%, and the melting point was 77-82°C.

### Examples 2-6

The procedure of Example 1 was repeated, except that the charging amounts (moles) for bisphenol A (BPA), tetrabutylammonium acetate (TBAA), triphenyl phosphate (TPP) and diphenyl carbonate (DPC) were changed as shown in Table 1, or tricresyl phosphate (TCP) was used instead of TPP. The results are summarized in Table 1.

**Table 1**

| Example No. | 2 | 3 | 4 | 5 | 6 |
|---|---|---|---|---|---|
| BPA (mole) | 0.3 | 0.4 | 0.2 | 0.3 | 0.2 |
| TPP (mole) | 0.1 | 0.1 | - | - | - |
| TCP (mole) | - | - | 0.1 | 0.1 | 0.17 |
| TBAA (mole) | 3.3x10⁻⁴ | 8.0x10⁻⁴ | 1.0x10⁻³ | 1.6x10⁻³ | 1.0x10⁻³ |
| DPC (mole) | 0.21 | 0.31 | 0.11 | 0.21 | 0.037 |
| BPA reaction rate (%) | 99.3 | 100 | 100 | 100 | 95.4 |
| Phosphate reaction rate (%) | 89.2 | 91.1 | 85.2 | 79.4 | 85.3 |
| P content (%) | 3.3 | 2.6 | 4.3 | 3.1 | 6.4 |
| Melting point(°C) | 74-81 | 110-120 | 104-121 | 72-96 | 66-96 |
| Wt. average mol. wt. | 4100 | 12300 | 8400 | 5900 | 3400 |

According to the invention there are provided flame retardant compounds with an excellent flame-retarding effect on organic polymer materials and virtually no problems of environmental pollution or volatility. It is thereby possible to obtain organic polymer material products with excellent flame retardant properties.

## Claims

1. A flame retardant compound obtained by reacting bisphenol A, diphenyl carbonate and a phosphoric acid ester represented by the following general formula (1): 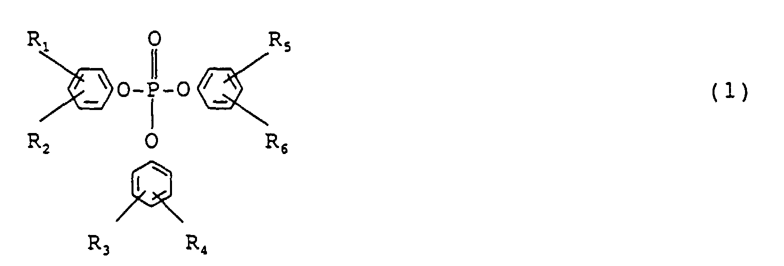 where R₁-R₆ may be the same or different and each independently represents hydrogen or methyl.

2. A compound according to claim 1, which is obtained by the reaction according to the following formula. 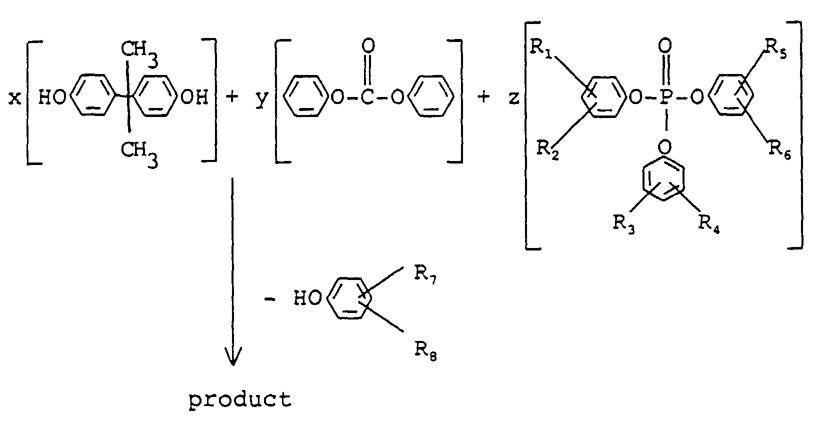 where x, y and z are any desired positive integers, and R₁-R₈ may be the same or different and each independently represents hydrogen or methyl.

3. A compound according to claim 1, which has a weight average molecular weight of 2000-30,000.

4. A process for production of flame retardant compounds that comprises reacting bisphenol A, diphenyl carbonate and a phosphoric acid ester represented by the following general formula (1): 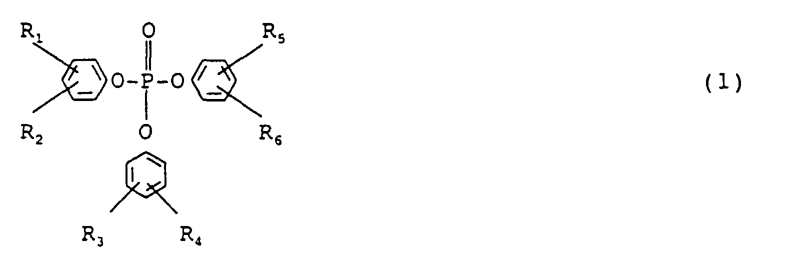 where R₁-R₆ may be the same or different and each independently represents hydrogen or methyl.

5. A process according to claim 4, wherein the reaction is carried out according to the following formula. 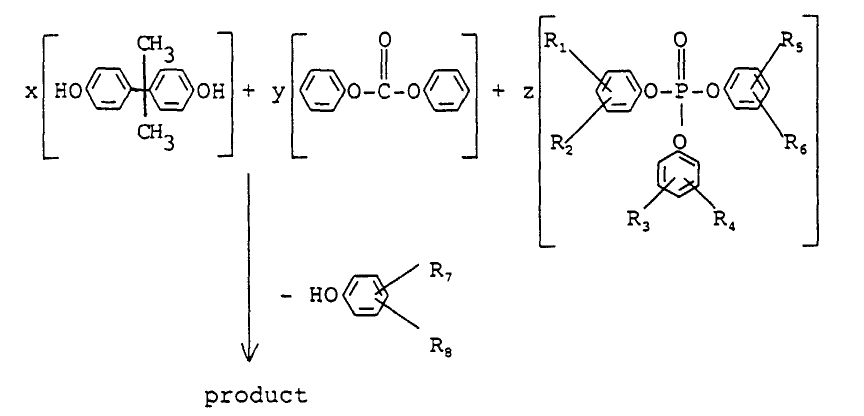 where x, y and z are any desired positive integers, and R₁-R₈ may be the same or different and each independently represents hydrogen or methyl.

6. A flame-retarded organic polymer material that contains a flame retardant compound according to claim 1.

7. A material according to claim 6, wherein the organic polymer material is selected from among polycarbonates, polyolefins, polyesters, styrene-based polymers and acrylic polymers.
